Europäisches Patentamt

European Patent Office

Office européen des brevets

(19)

(11) **EP 1 400 802 A1**

(12) # EUROPEAN PATENT APPLICATION

(43) Date of publication:
**24.03.2004 Bulletin 2004/13**

(51) Int Cl.[7]: **G01N 21/956**, G01N 21/95

(21) Application number: **02445116.3**

(22) Date of filing: **23.09.2002**

| | |
|---|---|
| (84) Designated Contracting States:<br>**AT BE BG CH CY CZ DE DK EE ES FI FR GB GR<br>IE IT LI LU MC NL PT SE SK TR**<br>Designated Extension States:<br>**AL LT LV MK RO SI**<br><br>(71) Applicant: **Ford Global Technologies, Inc.**<br>**Dearborn, Michigan 48126 (US)** | (72) Inventors:<br>• **Max, Erland**<br>  **426 68 Västra Frölunda (SE)**<br>• **Larsson, Peter**<br>  **426 56 Västra Frölunda (SE)**<br><br>(74) Representative: **Andersson, Per Rune**<br>**Albihns Göteborg AB**<br>**Box 142**<br>**401 22 Göteborg (SE)** |

(54) **Method and arrangement for detecting and evaluating surface irregularities**

(57)     The present invention relates to a method for measuring and evaluating surface irregularities, comprising: illuminating a surface (8) by means of at least two sources of light (2,3,13,14) arranged along a row which is substantially perpendicular to a reference plane (4) along which said surface (8) is arranged, each one of said sources of light (2,4,13,14) presenting an angle of incidence ($\beta_1,\beta_2,\beta_3,\beta_4$) to at least one partial surface (1) forming part of said surface (8), generating by means of each source of light (2,3,13,14) a set of reflections respectively from said surface (8), wherein each set contains at least one reflection from said partial surface (1), and detecting said sets of reflections by means of a light-sensitive detector (7). The invention is characterized in that it comprises: extrapolating, for each partial surface (1) and by means of detected light intensities (P) for each one of the at least two light sources (1,2,13,14) and their associated angles of incidence ($\beta_1,\beta_2,\beta_3,\beta_4$), an imaginary angle of incidence ($\beta_0$) for which no reflection would be detected, providing by means of said imaginary angle of incidence ($\beta_0$) a surface slope value ($\alpha$) of said partial surface (1) in the direction of said sources of light (2,3), and acquiring a height profile for said surface (8) by means of the slope values ($\alpha$) for the partial surfaces (1) of said surface (8). The invention also relates to an arrangement for measuring and evaluating surface irregularities. By means of the invention, an improved method for examining painted or unpainted surfaces is provided, for providing measurements of the waviness of such surfaces.

Figure 4a

EP 1 400 802 A1

**Description**

TECHNICAL FIELD

The present invention relates to a method for measuring and evalutating surface irregularities, according to the preamble of subsequent claim 1.

The present invention also relates to an arrangement for measuring and evaluating surface irregularities, according to the preamble of subsequent claim 6.

BACKGROUND ART

In many fields of industry, for example the car industry, there is an interest in detecting and analyzing surface irregularities of a component, for example a car body element. In this regard, there is a desire to acquire quantitative measurements of surface defects, i.e. the degree of waviness, of unpainted as well as painted surfaces. One common method to analyze a typical object with a non-planar surface is to optically break it up into a finite number of planar elements, and to determine the inclination of each one of these small planar elements.

The patent document US 4988202 describes a previously known arrangement in which several light sources illuminate a surface, for producing a reflected pattern that is detected by a camera. From the detected intensity values, the surface orientation of solder joints is acquired, by noting from which incident light source the most intense reflection is acquired for each small planar surface.

According to WO 01/59404 A1, a pattern is created on a surface by a pattern projector. Information about the shape and location of an object in relation to the projector and a camera is created. When the shape and position of the object is known, the microstructure of the object is calculated.

It is, however, desired to perform this type of measurement and evaluation in a more robust and general way. This problem is particularly relevant as regards relatively small waviness defects having relatively long wavelengths (for example, defects having a depth of the magnitude 10 μm and a length of the magnitude 10 cm).

DISCLOSURE OF INVENTION

It is an object of the invention to provide an improved method and arrangement for detecting and measuring surface irregularities, in particular for evaluating relatively small waviness defects.

Said object is accomplished by means of a method as claimed in subsequent claim 1, i.e. a method for measuring and evalutating surface irregularities, comprising illuminating a surface by means of at least two sources of light arranged along a row which is substantially perpendicular to a reference plane along which said surface is arranged, each one of said sources of light presenting an angle of incidence to at least one partial surface forming part of said surface, generating by means of each source of light a set of reflections respectively from said surface, wherein each set contains at least one reflection from said partial surface, detecting said sets of reflections by means of a light-sensitive detector. Said method is characterized in that comprises: extrapolating, for each partial surface and by means of detected light intensities for each one of the at least two light sources and their associated angles of incidence, an imaginary angle of incidence for which no reflection would be detected, providing by means of said imaginary angle of incidence a surface slope value of said partial surface in the direction of said sources of light, and acquiring a height profile for said surface by means of the slope values for the partial surfaces of said surface.

Said object is also accomplished by means of an arrangement according to subsequent claim 6, i.e. an arrangement for measuring and evaluating surface irregularities, which arrangement comprises at least two sources of light arranged so as to illuminate a surface, said sources of light being arranged along a row which is substantially perpendicular to a reference plane along which said surface is arranged, each one of said sources of light presenting an angle of incidence to at least one partial surface forming part of said surface, said arrangement also comprising a control unit arranged so as to generate, by means of each source of light, a set of reflections respectively from said surface, wherein each set contains at least one reflection from said partial surface, and a light-sensitive detector arranged to detect said sets of reflections. Said arrangement is characterized in that said control unit is adapted for extrapolating, for each partial surface and by means of detected light intensities for each one of the at least two light sources and their associated angles of incidence, an imaginary angle of incidence for which no reflection would be detected, said control unit furthermore being adapted for providing by means of said imaginary angle of incidence a surface slope value of said partial surface in the direction of said sources of light, and for acquiring a height profile for said surface by means of the slope values for the partial surfaces of said surface.

The invention relies on the basic principle that a surface intended to be examined is illuminated from different angles by means of corresponding lamps. Irregularities which occur in the surface give rise to shadowing effects, which are registered, preferably by means of a digital camera. The surface height profile is then evaluated based on the camera images.

By means of the invention, certain advantages will be obtained. Firstly, it can be noted that the invention can be used to give quantitative measurements of surface defects, i.e. the degree of waviness, for example on unpainted and painted surfaces.

An additional advantage is that no pre-preparation of the surface to be examined is needed. Also, the measurements can be made in a quick manner, and the same equipment can be used for different types of surface defects.

BRIEF DESCRIPTION OF DRAWINGS

The invention will be described below in connection with a number of embodiments and the enclosed drawings, in which:

Fig. 1 shows a side view of a partial surface that is illuminated from different angles and directions;

Fig. 2a shows a principle system layout in a perspective view;

Fig. 2b shows a principle system layout in a side view;

Fig. 3 shows a side view of a partial surface that is illuminated from different angles;

Fig. 4a shows a graph showing an image light intensity P as a function of an angle of incidence $\beta$;

Fig. 4b shows a graph of the same type as shown in Figure 4a, but in which the partial surface becomes reflecting for small angles of incidence $\beta$;

Fig. 4c shows a graph according of the same type as shown in Figure 4a, but in which the lamp reflex appears in the camera field of view for large angles $\beta$;

Fig. 7 shows a schematic top view of the arrangement; and

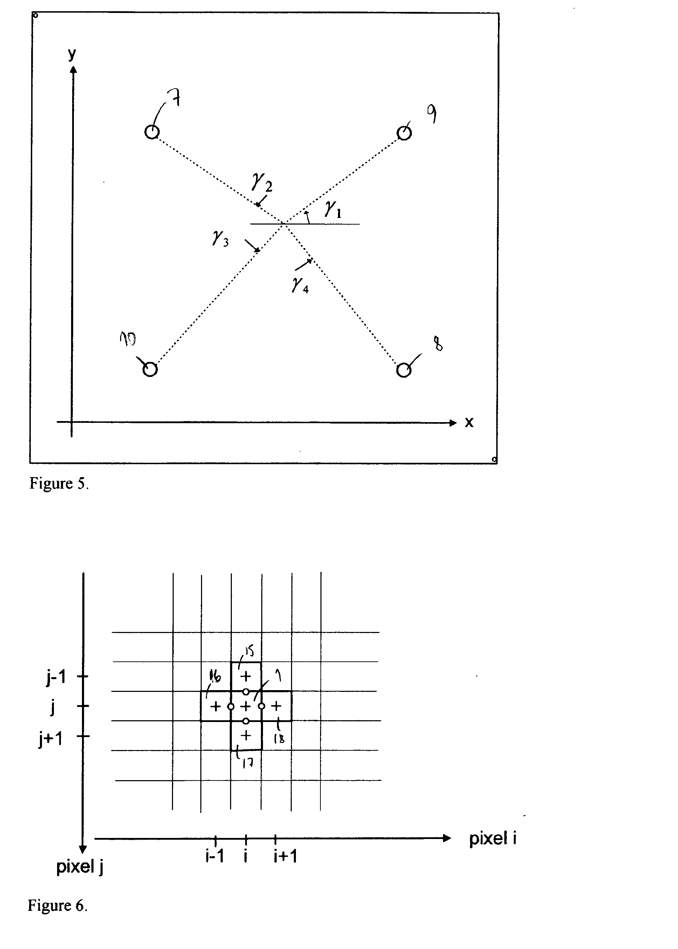

Fig. 6 shows a top view of a small part of the relevant surface.

PREFERRED EMBODIMENTS

The principal function of the system according to the invention is based on the fact that a surface is illuminated from different angles. Irregularities in the surface will result in shadowing effects, which are registered by means of a light-sensitive detector such as a digital camera having for example 1280x1024 pixels, thus giving a horizontal resolution of approximately 1 mm for a 1 square meter measuring area. The surface height profile is then evaluated from the camera images. This method and arrangement will be described in greater detail below.

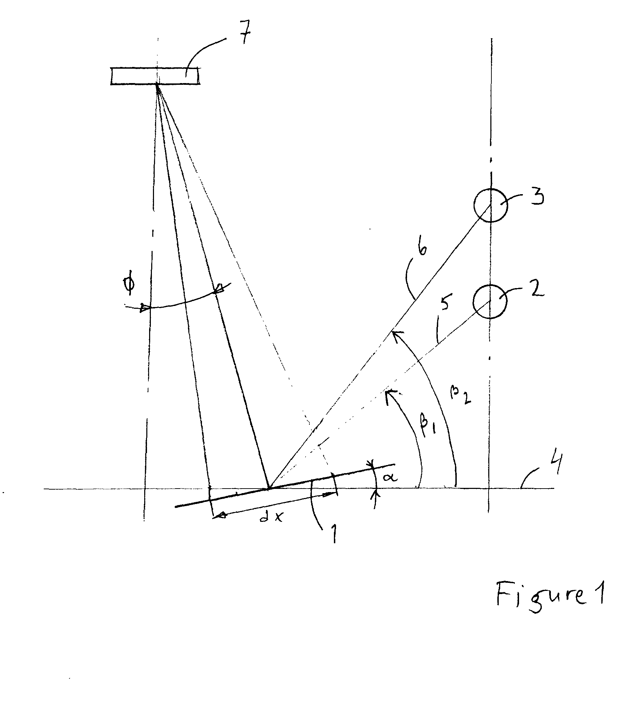

A schematic view of the principal arrangement according to the invention is presented with reference to Fig. 1. A partial surface 1 of the type as mentioned above and having a length dx is illuminated with a first light source 2 and a second light source 3 from different directions. The light sources 2, 3 are preferably in the form of flash lamps which are furthermore arranged so as to be activated one at a time. Generally, the lamps 2, 3 are arranged along a row which is substantially perpendicular to a reference plane 4 along which the partial surface 1 is arranged. In the embodiment shown in Fig. 1, the lamps 2, 3 are arranged along a vertically oriented row.

A so-called slope value $\alpha$ is defined as the angle that the partial surface 1 presents relative to the reference level 4, as regarded in a vertical plane intersecting the partial surface 1 and the lamps 2, 3. In the following, references to angles of incidence $\beta_1$ and $\beta_2$ as indicated in Fig. 1 refer to angles between two imaginary lines 5, 6, each extending between the centre of a respective lamp 2, 3 and the centre of the partial surface 1 in question. According to an embodiment of the invention, the angle of incidence of the light from the first lamp 2 is $\beta_1$ and the angle of incidence for the light from the second lamp 3 is $\beta_2$. However, additional lamps may be used, as will be described below. The definitions of the angles $\alpha$, $\beta$ above, is valid for all sets of lamps.

The invention is based on the principle that irregularities in the total surface will result in shadowing effects, which are registered by means of a light-sensitive detector, preferably in the form of a digital camera 7. This camera 7 is adapted for registering a digital image for each individual lamp 2, 3 when it is activated so as to illuminate the partial surface 1. In a manner which is previously known per se, the registered digital image is composed by a number of digital pixels, which together make up the resolution for the images registered by digital camera 7. Preferably, each pixel corresponds to a respective partial surface 1. The intensity detected by the digital camera 7 as a function of the

light incident angles $\beta_1$ and $\beta_2$ is obtained for every point, by means of the camera images. In this regard, the number of pixels depends on the resolution of the camera 7. Furthermore, as will be described in greater detail below, the slope value $\alpha$ of each partial surface 1 can be obtained from the camera images. This means also that the surface height profile can be calculated for an entire surface being composed of a plurality of partial surfaces.

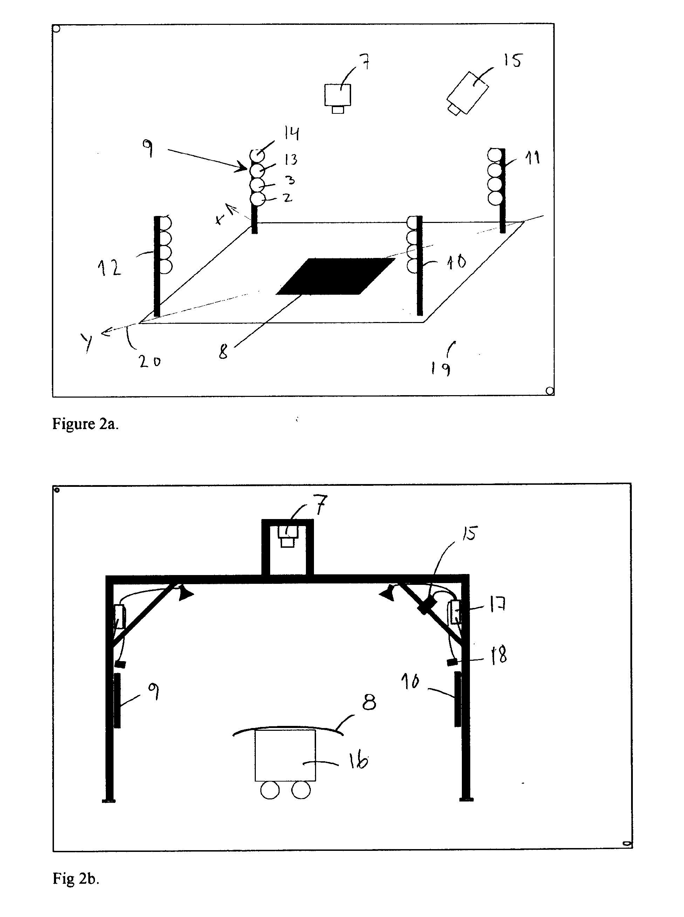

Fig. 2a indicates how the total surface 8 which is intended to be analyzed is placed in or near the centre of a measuring system. In Fig. 2a, showing a preferred embodiment, four arrays 9, 10, 11, 12 are provided. For example, a first array 9 has four flash lamps 2, 3, 13, 14 which are positioned on different vertical levels in a vertical row, i.e. in a row which is substantially perpendicular to an imaginary reference plane along which the surface 8 is oriented. The remaining arrays 10, 11, 12 are arranged in a similar manner as the first array 9.

The four arrays 9, 10, 11, 12 are located in the four corners of a square, so that the total surface 8 can be illuminated from different directions and height angles $\beta$. The positions of these vertically oriented lamp arrays 9, 10, 11, 12 will be described later. The use of flash lamps makes it possible to operate the measuring system in daylight. A pattern generator 15 may also be used for obtaining initial height values, which will be described later. There are alternative methods of obtaining said initial height values, and using any of those methods, the pattern generator 15 will not be needed. A side view of the system set-up is shown in Fig. 2b, in which the total surface 8 that is intended to be examined is placed on a carriage 16. As shown in Fig. 2b (but not in Fig 2a), a supply box 17 and power meter 18 are also connected to the system. The supply box 17 constitutes an interface between the arrays 9, 10, 11, 12 of flash lamps and a control unit (not shown), which is computer-based and preferably in the form of a PC type computer. The supply box 17 is also adapted so as to deliver correct power to the flash lamps. The power meter 18 is adapted to measure the flash lamp power from the lamp arrays 9, 10, 11, 12. Accurate values of the flash lamp powers are needed for the evaluation of measurements in the control unit.

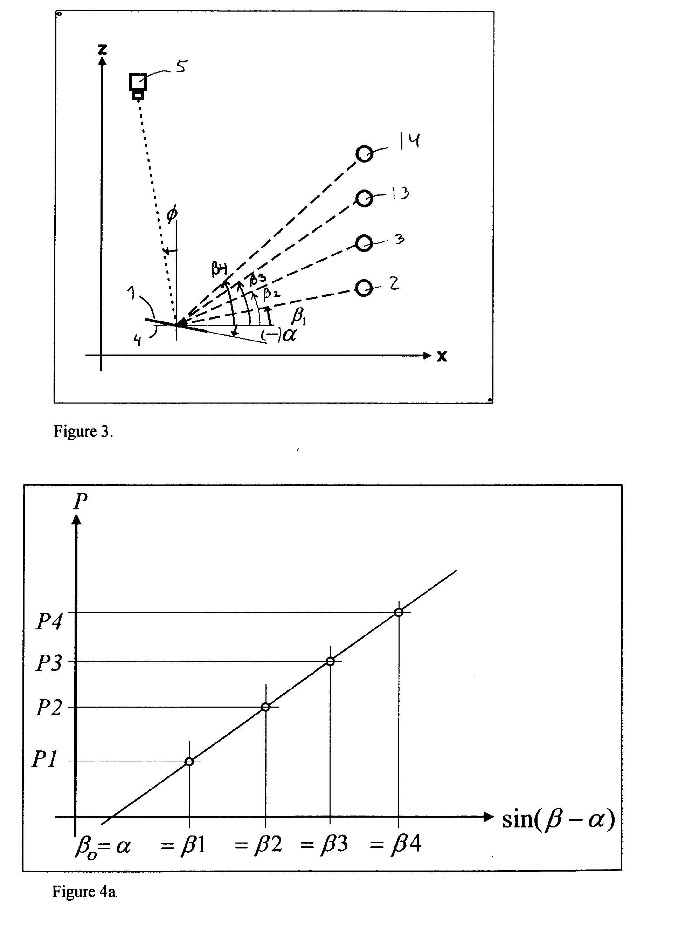

The principles of the present invention will now be described. Referring to Figs. 3 and 4a, each partial surface 1 with its slope $\alpha$ is illuminated from different angles. More precisely, a first angle $\beta_1$ corresponds to a first lamp 2 (see Fig. 3), a second angle $\beta_2$ corresponds to a second lamp 3, a third angle $\beta_3$ corresponds to a third lamp 13 and a fourth angle $\beta_4$ corresponds to a fourth lamp 14. One image is collected for every angle, i.e. one image is registered for each lamp 2, 3, 13, 14. As previously mentioned, every partial surface 1 preferably corresponds to a pixel of the digital camera 7. Then, for every pixel of the digital camera 7, the image intensity P as a function of $\beta$ is collected and stored. The intensity P as a function of the angle of incidence $\beta$ may be shown by means of a graph, see Fig. 4a. The measured values are then, for every pixel/partial surface 1, extrapolated to zero intensity P, where there is no reflection at all. The obtained value of the angle of incidence at zero image intensity P is denoted with reference numeral $\beta_0$ in Fig. 4a. It is important to note that this "zero value" $\beta_0$ of the angle of incidence equals the slope value $\alpha$, since an imaginary lamp that is placed at an angle $\alpha$ with respect to the reference level 4 would result in no reflected light. One value of $\alpha$ is thus collected for every individual pixel/partial surface 1 for one vertical array of lamps 9, 10, 11, 12. This procedure gives the surface slope value $\alpha$ in the direction from the actual partial surface 1 to the lamp position. This information is extracted from the registered digital images for every individual pixel, where one image has been registered for each lamp.

With renewed reference to Fig. 2a, an embodiment is shown having in total four arrays of lamps, as indicated by means of reference numerals 9, 10, 11, 12. A first array 9 and a second array 10 are positioned in such a way that they illuminate the surface substantially along an x-axis 19, whereas a third array 11 and a fourth array 12 are positioned in such a way that they illuminate said surface substantially along a y-axis 20. The result of this is that the slope values in the x- and y-directions $\alpha_x(x,y)$ and $\alpha_y(x,y)$ can be calculated for every individual image pixel. Furthermore, in order to substantially cancel out certain errors, which will be described later, it is also advantageous to place the arrays of lamps in pairs substantially opposite to each other, with the surface 8 that shall be evaluated placed between them. In order to obtain the slopes values in the x- and y-directions, i.e. $\alpha_x(x,y)$ and $\alpha_y(x,y)$, and also to substantially cancel out errors, two pairs of vertical lamp arrays, i.e. four arrays 9, 10, 11, 12, should be used. The two pairs of lamp arrays 9, 10; 11, 12 should then be positioned in such a way that the x-axis 19 and the y-axis 20 extend substantially between the respective lamp array pair. Thus, by using four vertical lamp arrays 9, 10, 11, 12, the surface slope values $\alpha$ is obtained in more than one horizontal direction (i.e. four distinct directions according to the described embodiment), and thus the slopes values in the x- and y-directions $\alpha_x(x,y)$ and $\alpha_y(x,y)$, respectively, can be calculated for every individual image pixel/partial surface 1. This principle is also indicated in Fig. 5.

It is to be noted that a system using four lamp arrays is just an example of a preferred embodiment of the invention, and other numbers and set-ups of lamp arrays are possible.

The light power from a lamp which strikes and illuminates one camera pixel after having been reflected on the surface in question can be expressed according to the following (see Fig. 3):

$$P_{camera} = const \cdot R_{surface} \cdot f_{scattering}(\phi, \beta - \alpha) \cdot I_{lamp}$$

where the following terms have been used:

*const*       is a constant for the actual pixel,
$R_{surface}$     is the reflectance of the surface for the actual pixel,
$f_{scattering}$   is a scattering function for the surface for the actual pixel, and
$I_{lamp}$      is the light intensity at the surface.

For a diffuse surface, the following can be assumed:

$$f_{scattering}=\sin(\beta-\alpha)$$

Experiments show that:

$$f_{scattering}(\phi,\beta-\alpha) \approx f_\phi(\phi) \cdot f_\beta(\beta-\alpha)$$

A normalised image power can therefore be written as:

$$P_m = P_{camera} / I_{lamp} \approx constb \cdot f_\beta(\beta-\alpha)$$

If the surface is diffuse, $P_m$ becomes:

$$P_m = constb \cdot \sin(\beta-\alpha),$$

see Fig. 4a.

The dependence of $\phi$ does not have to be taken into account, as $\phi$ is a constant for each pixel that is evaluated. The angle $\phi$ changes from pixel to pixel, which does not affect the measurements, as they are relative measurements.

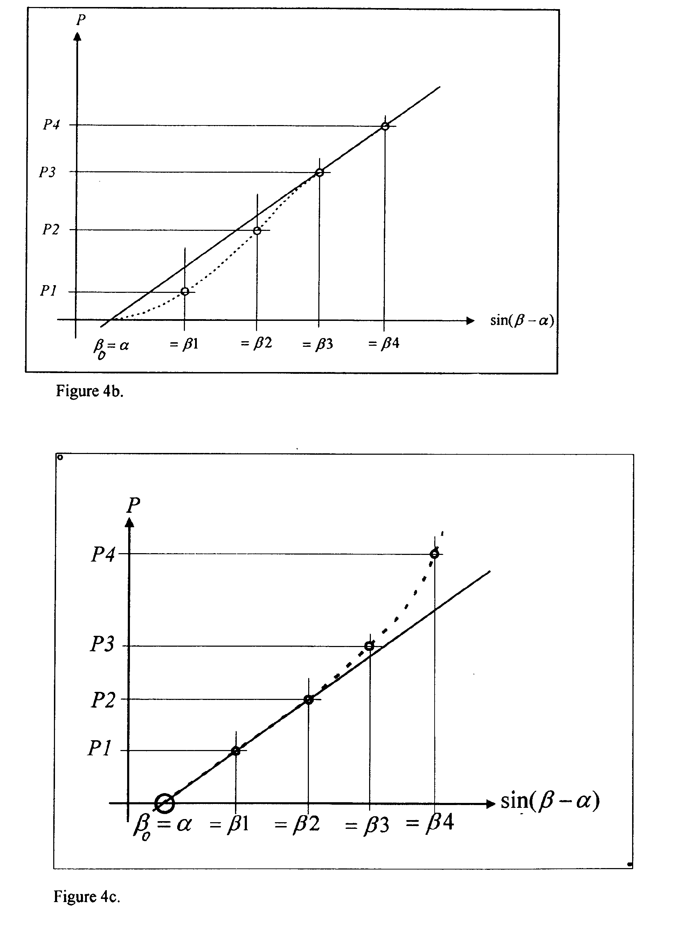

Certain non-linear situations involving the present invention will now be described with reference to Figs. 4b and 4c. Firstly, it should be noted that for some surfaces, the partial surface 1 becomes reflecting for small angles $\beta$, and thus the surface becomes more like a mirror. This is indicated in Fig. 4b, which shows the manner in which the partial surface becomes reflecting for small angles $\beta$. This means that a lower light intensity is detected by means of the camera 7, since the incoming light is reflected in a less diffuse way. Due to the fact that a higher light intensity generally is detected by the camera 7 when the reflection is more diffuse, the detected intensity is lower for the small angles $\beta$ where the surface becomes reflecting.

Sometimes the lamp reflex gets into the camera field of view for large angles $\beta$, see Fig. 4c. This is another type of non-linear situation, in which the detected intensity is higher for the large angles $\beta$ where the lamp reflex gets into the camera field.

However, if several lamps 2, 3, 13 ,14 are used at each lamp position 9, 10, 11, 12, as shown in Fig. 3, the extrapolation to zero intensity can be done even if the function P versus $\beta$ is non-linear, as mentioned above with reference to Figs. 4b and 4c. If the scattering behaviour is known for the actual surface, the extrapolation algorithm can use an already known non-linear extrapolation function. The scattering behaviour may be previously known by means of, for example, studies of a special kind of material that is used frequently.

As mentioned earlier, by using more than one array of lamps, e.g. four 9, 10, 11, 12, the surface slopes in the x- and y-direction can be calculated.

The problems that occur when extrapolating a non-linear behaviour of the P versus $\beta$ relationship to zero intensity may also be avoided by using more than one array of lamps positioned in pairs substantially opposite to each other, e.g. four 9, 10, 11, 12. The errors that have been described may be cancelled, more or less, if using lamps or arrays of lamps at several opposite positions, also shown in Fig. 5. With reference to Fig. 5, we may write for every image pixel:

$$\alpha_x = \frac{\sum_m \alpha_m \cdot \cos(\gamma_m)}{\sum_m \cos^2(\gamma_m)} - \alpha_y \cdot \frac{\sum_m \sin(\gamma_m) \cdot \cos(\gamma_m)}{\sum_m \cos^2(\gamma_m)}$$

$$\alpha_y = \frac{\sum_m \alpha_m \cdot \sin(\gamma_m)}{\sum_m \sin^2(\gamma_m)} - \alpha_x \cdot \frac{\sum_m \sin(\gamma_m) \cdot \cos(\gamma_m)}{\sum_m \sin^2(\gamma_m)}$$

$m$ = the different lamp modules (1,...4).

Using these equations, $\alpha_x$ and $\alpha_y$ are calculated for every image pixel (x, y). The different $\alpha_m$ angles are obtained from more or less opposite directions (m=1 and 3, m=2 and 4). Experiments show that most of the errors are therefore cancelled.

To integrate all the acquired slopes $\alpha_x(x,y)$ and $\alpha_y(x,y)$ into a surface z(x,y), every image pixel is to be given an initial height value. This initial height value is supposed to be a start value for the iteration process, and the better the start value is, the less time consuming the iteration becomes. This initial height value may be acquired by means of the pattern generator 13, the camera 7 and triangulating technique, as described in WO 01/79404 A1. Also, the flash lamps 2, 3, 13 ,1 4 may be used.

A first method using the flash lamps 2, 3, 13 ,14 to acquire the initial height value, needs at least two substantially opposing arrays of lamps 7, 8; 9, 10, as shown in Fig. 2a. Firstly, it can be assumed that the slope value $\alpha$ for a partial surface 1 is zero. Then, the P versus $\beta$ relationship can be obtained and extrapolated to zero intensity according to what has been described above. After such a step, an estimation of the height for the imaginary lamp, that would have resulted in the angle of incidence $\beta_0$ that equals $\alpha$, can be carried out. By making this procedure for said two opposing arrays of lamps 9, 10; 11, 12 and then calculating the mean height value, many of the errors are cancelled. This method is repeated for every partial surface 1, i.e. for every pixel in a digital image registered by the digital camera 7.

A second method using the flash lamps is to use the iteration process described below as a pre-processing stage in order to acquire initial height values.

A more rough method is to solely guess an initial height value.

During the integration of the height values, there may be differing values at the edges of each partial surface 1. This is indicated in Fig. 6, wherein the edges are marked with small circles. A height correction value corr(x,y) is therefore calculated for every pixel as the mean height difference between the edges of the partial surface/pixel 1 and its four neighbours 17, 16, 17, 18.

The iteration process is executed as described in the following.

1. Every image pixel gets an initial height value z(x,y).
2. Every pixel is tilted accordingly to $\alpha_x(x,y)$ and $\alpha_y(x,y)$.
3. A height correction value corr(x,y) is calculated for every pixel as the mean height difference between the edges (see the circles in Fig. 6) of the pixel and its four neighbours.
4. For every pixel: z(x,y)= $Z_{old}$(x,y) - corr(x,y).
5. Points 3 and 4 are repeated e.g. 100 times.

In order to obtain an iteration which is less time consuming, the procedure above can first be carried out on larger surface elements consisting of e.g. 64x64 pixels. This gives initial height values for iteration with 32x32 pixel elements and so on.

It is to be noted that the embodiment example described above is only an example of how the invention may be applied. The number of lamps 2, 3, 13, 14 in every vertical lamp array 9, 10, 11, 12 may vary from two and more, and the number of arrays may also vary within the scope of the invention. The reflections that are referred to, are normally in the form of diffuse reflections.

The invention is not limited to what has been described above, but may be varied freely within the scope of the appended claims. For example, in the system according to Fig. 2a, at least one vertical array of lamps with at least two lamps at each array is used for executing the present invention. Also, the lamps used may for example be constituted by any sufficient light source.

**Claims**

1. A method for measuring and evaluating surface irregularities, comprising:

   illuminating a surface (8) by means of at least two sources of light (2, 3, 13, 14) arranged along a row which is substantially perpendicular to a reference plane (4) along which said surface (8) is arranged, each one of said sources of light (2, 4, 13, 14) presenting an angle of incidence ($\beta_1$, $\beta_2$, $\beta_3$, $\beta_4$) to at least one partial surface (1) forming part of said surface (8),
   generating by means of each source of light (2, 3, 13, 14) a set of reflections respectively from said surface (8), wherein each set contains at least one reflection from said partial surface (1),
   detecting said sets of reflections by means of a light-sensitive detector (7), **characterized in that** it comprises:

   extrapolating, for each partial surface (1) and by means of detected light intensities (P) for each one of the at least two light sources (1, 2, 13, 14) and their associated angles of incidence ($\beta_1$, $\beta_2$, $\beta_3$, $\beta_4$), an imaginary angle of incidence ($\beta_0$) for which no reflection would be detected,
   providing by means of said imaginary angle of incidence ($\beta_0$) a surface slope value ($\alpha$) of said partial surface (1) in the direction of said sources of light (2, 3), and
   acquiring a height profile for said surface (8) by means of the slope values ($\alpha$) for the partial surfaces (1) of said surface (8).

2. Method according to claim 1, **characterized in that** the surface slope value ($\alpha$) is obtained in more than one horizontal direction ($\alpha_x(x,y)$, $\alpha_y(x,y)$).

3. Method according to any of the preceding claims, **characterized in that** said detection of said sets of reflections is carried out for each resolution pixel of the detector (7).

4. Method according to claim 3, **characterized in that** an iteration process for acquiring said surface height profile for the surface (8) by integrating the slopes values ($\alpha_x(x,y)$, $\alpha_y(x,y)$) into a surface ($z(x,y)$) is executed as described in the following:

   1. Every image pixel gets an initial height value $z(x,y)$,
   2. Every pixel is tilted accordingly to $\alpha_x(x,y)$ and $\alpha_y(x,y)$,
   3. A height correction value corr$(x,y)$ is calculated for every pixel as the mean height difference between the edges of the pixel and its four neighbours,
   4. For every pixel: $z(x,y)= Z_{old}(x,y)$ - corr$(x,y)$, and
   5. Points 3 and 4 are repeated until a sufficient result is acquired.

5. Method according to claim 4, **characterized in that** said iteration process is first carried out on relatively large surface elements, thus giving initial height values for iteration for relatively small surface elements.

6. An arrangement for measuring and evaluating surface irregularities, which arrangement comprises at least two sources of light (2, 3, 13, 14) arranged so as to illuminate a surface (8), said sources of light (2, 3, 13, 14) being arranged along a row which is substantially perpendicular to a reference plane (4) along which said surface (8) is arranged, each one of said sources of light (2, 4, 13, 14) presenting an angle of incidence ($\beta_1$, $\beta_2$, $\beta_3$, $\beta_4$) to at least one partial surface (1) forming part of said surface (8), said arrangement also comprising a control unit arranged so as to generate, by means of each source of light (2, 3, 13, 14), a set of reflections respectively from said surface (8), wherein each set contains at least one reflection from said partial surface (1), and a light-sensitive detector (7) arranged to detect said sets of reflections, **characterized in that** said control unit is adapted for extrapolating, for each partial surface (1) and by means of detected light intensities (P) for each one of the at least two light sources (1, 2, 13, 14) and their associated angles of incidence ($\beta_1$, $\beta_2$, $\beta_3$, $\beta_4$), an imaginary angle of incidence ($\beta_0$) for which no reflection would be detected, said control unit furthermore being adapted for providing by means of said imaginary angle of incidence ($\beta_0$) a surface slope value ($\alpha$) of said partial surface (1) in the direction of said sources of light (2, 3), and for acquiring a height profile for said surface (8) by means of the slope values ($\alpha$) for the partial surfaces (1) of said surface (8).

7. Arrangement according to claim 6, **characterized in that** at least two of said sources of light (2, 3, 13, 14) constitute a generally vertical lamp array (9; 10; 11; 12).

8. Arrangement according to claim 6 or 7, **characterized in that** said sources of light (2, 3, 13, 14) are arranged along at least two generally vertical lamp arrays (9, 10, 11, 12) which are positioned in pairs substantially opposite to each other.

Figure 1

Figure 2a.

Fig 2b.

Figure 3.

Figure 4a.

Figure 4b.

Figure 4c.

Figure 5.

Figure 6.

**European Patent Office**

**EUROPEAN SEARCH REPORT**

Application Number

EP 02 44 5116

| DOCUMENTS CONSIDERED TO BE RELEVANT | | | | |
|---|---|---|---|---|
| Category | Citation of document with indication, where appropriate, of relevant passages | | Relevant to claim | CLASSIFICATION OF THE APPLICATION (Int.Cl.7) |
| A | US 2001/005264 A1 (BRATTON RAYMOND H ET AL) 28 June 2001 (2001-06-28) * paragraphs [0033],[0034],[0038]-[0040]; figures 4,6,7,9 * | | 1-3,6-8 | G01N21/956 G01N21/95 |
| D,A | WO 01 59404 A (VOLVO PERSONVAGNAR AB ;LARSSON PETER (SE); MAX ERLAND (SE)) 16 August 2001 (2001-08-16) * page 2, line 27 - page 6, line 13; figures 1,2 * | | 1,2,6-8 | |
| D,A | US 4 988 202 A (NAYAR SHREE K ET AL) 29 January 1991 (1991-01-29) * column 4, line 45 - column 6, line 7; figures 2A,3 * * column 8, line 6 - line 29 * * column 8, line 42 - line 55 * * column 9, line 33 - line 36 * | | 1-3,6-8 | |
| A | DE 40 32 327 A (ABOS AUTOMATION BILDVERARBEITU) 16 April 1992 (1992-04-16) * column 2, line 7 - line 15 * * column 4, line 58 - line 66; figure 4 * | | 1,6 | TECHNICAL FIELDS SEARCHED (Int.Cl.7) G01N |
| A | US 5 991 039 A (FUJISHIRO KEISUKE ET AL) 23 November 1999 (1999-11-23) * column 4, line 32 - line 41; figure 4C * | | 1,6 | |

The present search report has been drawn up for all claims

| Place of search | Date of completion of the search | Examiner |
|---|---|---|
| MUNICH | 4 December 2002 | Duijs, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EP 1 400 802 A1

## ANNEX TO THE EUROPEAN SEARCH REPORT
## ON EUROPEAN PATENT APPLICATION NO.

EP 02 44 5116

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2002

| Patent document cited in search report | | Publication date | Patent family member(s) | | Publication date |
|---|---|---|---|---|---|
| US 2001005264 | A1 | 28-06-2001 | US | 6191856 B1 | 20-02-2001 |
| WO 0159404 | A | 16-08-2001 | SE | 515711 C2 | 01-10-2001 |
| | | | EP | 1192415 A1 | 03-04-2002 |
| | | | SE | 0000418 A | 10-08-2001 |
| | | | WO | 0159404 A1 | 16-08-2001 |
| | | | US | 2002093664 A1 | 18-07-2002 |
| US 4988202 | A | 29-01-1991 | NONE | | |
| DE 4032327 | A | 16-04-1992 | DE | 4032327 A1 | 16-04-1992 |
| | | | WO | 9207250 A1 | 30-04-1992 |
| US 5991039 | A | 23-11-1999 | JP | 10163694 A | 19-06-1998 |

EPO FORM P0459

For more details about this annex : see Official Journal of the European Patent Office, No. 12/82

15